(19) **Europäisches Patentamt**
**European Patent Office**
**Office européen des brevets**

(11) **EP 2 116 771 B1**

(12) **EUROPÄISCHE PATENTSCHRIFT**

(45) Veröffentlichungstag und Bekanntmachung des Hinweises auf die Patenterteilung:
**17.08.2011  Patentblatt 2011/33**

(51) Int Cl.:
***F23N 3/08*** *(2006.01)*      ***F23N 5/24*** *(2006.01)*

(21) Anmeldenummer: **08008769.5**

(22) Anmeldetag: **09.05.2008**

(54) **Luftzahloptimierter Start und Betrieb eines Brenners**

Start and operation of a burner with optimised air ratio

Démarrage et fonctionnement à coefficient d'air optimisé d'un brûleur

(84) Benannte Vertragsstaaten:
**DE FR GB IT**

(43) Veröffentlichungstag der Anmeldung:
**11.11.2009  Patentblatt 2009/46**

(73) Patentinhaber: **Truma Gerätetechnik GmbH & Co. KG**
**85640 Putzbrunn (DE)**

(72) Erfinder:
• **Schreckenbach, Stefan**
**81541 München (DE)**
• **Armbruster, Uwe**
**80689 München (DE)**
• **Ströhle, Elmar**
**81241 München (DE)**
• **Laux, Wilhelm**
**81829 München (DE)**

(74) Vertreter: **Müller - Hoffmann & Partner**
**Patentanwälte**
**Innere Wiener Strasse 17**
**81667 München (DE)**

(56) Entgegenhaltungen:
**EP-A- 0 225 655      EP-A- 0 384 280**
**EP-A- 1 717 514      DE-A1-102006 006 964**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Starten einer Brennervorrichtung.

Brennervorrichtungen werden häufig in Heizungen von mobilen Einrichtungen eingesetzt, z. B. Wohnwagen, Wohnmobilen oder Booten, um über Wärmetauscher Luft bzw. Wasser komfortabel zu erwärmen. Als Brennstoff wird insbesondere bei mobilen Einrichtungen Flüssiggas, wie z. B. Butan oder Propan, aber auch Flüssigkraftstoff, wie z. B. Diesel, verwendet.

Brennersteuerungen für derartige Heizgeräte müssen einigen Sicherheitsanforderungen genügen, die in einschlägigen Normen (EN 624 - "Gasheizgeräte für Freizeitgeräte und Boote"; EN 298 - "Sicherheitsanforderungen an Brennersteuerungen von Gasheizgeräten") niedergelegt sind.

Beim Starten eines Heizgeräts bereitet oft das Zünden einer Flamme am Brenner Schwierigkeiten. Der Grund dafür liegt darin, dass das richtige stöchiometrische Verhältnis des Brennstoffs mit der Verbrennungsluft von Beginn an hergestellt werden muss, um die Abgasemissionen beim Start möglichst gering zu halten sowie Verbrennungsinstabilitäten und thermoakustische Phänomene zu vermeiden. Das stöchiometrische Verhältnis hängt unter anderem von der Verbrennungslufttemperatur ab, die insbesondere bei mobilen Einrichtungen zwischen -30 °C und +70 °C oder mehr liegen kann. Aufgrund dieser großen Unterschiede ist es kaum möglich, das richtige stöchiometrische Verhältnis zwischen Brennstoff und Verbrennungsluft vom Start weg zu erreichen.

Ein anderes Problem beim Starten der Brennervorrichtung besteht in der Geräuschentwicklung beim Zünden. Wenn das Gemisch aus Brennstoff und Verbrennungsluft gezündet wird, entsteht ein in der Regel deutlich hörbares und daher für den Benutzer unter Umständen als störend empfundenes Geräusch.

Es ist bekannt, eine Brennkammer, in der sich die Flamme ausbilden soll, vor dem Start mit Verbrennungsluft vorzuspülen, dann ein Verbrennungsluftgebläse auf eine feste Drehzahl einzustellen, ein Magnetventil für die Brennstoffzufuhr zu öffnen und schließlich in die zündfähige Atmosphäre (Gemisch aus Brennstoff und Verbrennungsluft) beispielsweise mit einer Zündkerze hineinzuzünden. Wenn die Flamme brennt, nimmt die Brennervorrichtung einen geregelten Betrieb auf. Erlischt hingegen die Flamme wieder, so erkennt eine Flammüberwachung dies und versucht, beispielsweise 10 Sekunden lang, durch Abgabe von Zündfunken nachzuzünden. Gelingt dies nicht, wird das Magnetventil geschlossen und die Heizung begibt sich in einen Störungszustand.

Üblicherweise erfolgt eine Verbrennung in einer Brennervorrichtung bei einer Luftzahl λ von ca. 1,1 bis 1,3. Die Luftzahl λ entspricht dem Verhältnis einer tatsächlich einem Verbrennungsvorgang (Reaktion) zugeführten Luftmenge zu einer theoretisch bei vollständiger (ideal-stöchiometrischer) Verbrennung erforderlichen Mindestluftmenge. Bei einer Luftzahl λ von 1,0 wird dementsprechend genau soviel Verbrennungsluft zugeführt, wie erforderlich ist, um den Brennstoff vollständig zu verbrennen. In der Praxis wird eine derartige ideale Verbrennung aufgrund einer unvollständigen Durchmischung der Reaktionspartner jedoch bei einer Luftzahl λ von 1,0 nie erreicht werden können, sodass die Luftzahl λ auf den oben genannten Bereich von 1,1 bis 1,3 eingestellt wird, um einen Verbrennungsluftüberschuss zu erreichen.

Da die Dichte der Verbrennungsluft von der Temperatur abhängt, ist auch die Luftzahl λ von der Verbrennungslufttemperatur abhängig. Wenn z. B. die Temperatur der Verbrennungsluft niedrig ist, steigt die Luftzahl λ bei einem gleichbleibenden Zustrom von Verbrennungsluft an.

Die Luftzahl λ hat weiterhin Einfluss auf die Zusammensetzung der Abgasemission, die durch die Verbrennung freigesetzt wird. So sinkt bei steigender Luftzahl zunächst der Gehalt des CO im Abgas, steigt aber bei einer weiteren Erhöhung wieder an. Um einen möglichst schadstoffarmen und emissionsgünstigen Betrieb der Brennervorrichtung zu ermöglichen, ist daher eine Luftzahl λ in der Brennkammer anzustreben, die in einem im Hinblick auf die Abgasemission günstigen Bereich liegt.

Beim Starten ist aufgrund der noch kalten Brennkammer, der instationären Strömungsverhältnisse und dem ungenauen, in einem gewissen Bereich zufallsabhängigen Zündzeitpunkt die CO-Bildung höher als gewünscht. Zudem entstehen bei kalter Brennkammer und niedrigem Verbrennungsluftanteil Störgeräusche wie beispielsweise Brummen.

Auch nach dem Start in einem Betrieb der Brennervorrichtung können erhöhte Schadstoffemissionen entstehen, wenn die Brennervorrichtung mit einer nicht optimalen Luftzahl λ betrieben wird. Die Luftzahl λ ist daher auch nach dem Start für den Betrieb der Brennervorrichtung geeignet zu wählen und eine Zufuhr von Verbrennungsluft entsprechend zu gewährleisten. Hierbei können neben der Verbrennungslufttemperatur auch weitere Faktoren wie die Kaminbeschaffenheit, der Luftdruck, die Brennstoffbeschaffenheit und der Brennstoffdurchsatz einen Einfluss haben.

In EP 1 717 514 A 1 ist eine Gasbrennervorrichtung mit Ablaufsteuerung gezeigt, wobei die Ablaufsteuerung eine Änderung eines Betriebszustands der Gasbrennervorrichtung von einem Ausgangsbetriebszustand in einen Ziel-Betriebszustand steuert. Dabei wird die Drehzahl eines Verbrennungsluftmotors über einen vorbestimmten Zeitabschnitt von einer Ausgangsdrehzahl auf eine Zieldrehzahl geändert. Während des Zeitabschnitts erfolgt eine Änderung der Brenngaszufuhr auf eine dem Ziel-Betriebszustand entsprechende Zielbrenngaszufuhr.

Aus der DE 43 23 221 C1 ist es bekannt, während des Starts eines brennerbetriebenen Heizgeräts die Drehzahl eines Brennluftgebläses bei konstanter Brennstoff-Förderung kontinuierlich anzuheben, um einen für die Zündung geeigneten Betriebspunkt zu erreichen. Auch nach der Zündung wird die Drehzahl weiter gesteigert.

Weiterhin ist es bekannt, die Drehzahl eines Verbrennungsluftgebläses auf Basis von Kennlinien in Abhängigkeit der Brennlufttemperatur in Gebläsenähe zu regeln.

In der EP-A-0 384 280 wird ausgeführt, dass bei Standheizungen mit Druckzerstäuberbrennern, die ein geringes Brennkammervolumen aufweisen, eine gute Durchmischung von Luft und Brennstoff praktisch nur bei relativ hohen Luftströmungsgeschwindigkeiten erreicht wird. Es wird weiterhin ausgeführt, dass dies zu Zündschwierigkeiten, insbesondere bei hohen Betriebsspannungen und tiefen Temperaturen führt. Es wird vorgeschlagen, bei einer Inbetriebnahme des Heizgeräts zunächst einen Gebläsemotor einzuschalten und dann spannungslos zu schalten, sodass die Drehzahl wieder abnimmt. Dann werden Hochspannungszündung und Brennstoffzufuhr eingeschaltet, sodass die Zündung bei verringerter Gebläsedrehzahl erfolgen kann. Nach Erkennen der Flamme im Brenner wird die Hochspannungszündung ausgeschaltet und der Gebläsemotor wieder eingeschaltet.

In der DE 10 2006 006 964 A1 ist ein Verfahren zum Starten einer Feuerungseinrichtung, beispielsweise eines Gasbrenners, bei unbekannten Rahmenbedingungen gezeigt, wobei für die Feuerungseinrichtung in einem Speicher eine aus empirischen Ermittlungen bekannte Kennlinie einer Startluftzahl in Abhängigkeit von der Brenntemperatur hinterlegt ist. Es wird eine Kalibrierung des Startverlaufs vorgeschlagen, wobei das zum Zünden nötige Verhältnis von Öffnung des Gasventils zur Luftmenge iterativ durch Variation der Gas- und/oder der Luftmenge ermittelt wird. Im Fall der Zündung wird die Feuerungseinrichtung gestartet und die zutreffende Luftzahl gespeichert.

Der Erfindung liegt die Aufgabe zugrunde, ein Verfahren zum Starten einer Brennervorrichtung anzugeben, das es ermöglicht, die Brennervorrichtung bei unterschiedlichen Umgebungsbedingungen zu starten und zu betreiben.

Die Aufgabe wird durch ein Verfahren nach Patentanspruch 1 zum Starten einer Brennervorrichtung und eine Brennervorrichtung nach Patentanspruch 10 gelöst. Weiterentwicklungen sind den abhängigen Ansprüchen zu entnehmen.

Eine Brennervorrichtung weist eine Brennkammer zum Verbrennen von Brennstoff und Verbrennungsluft auf. Als Brennstoff kann beispielsweise ein Flüssiggas wie Propan oder Butan oder ein Gemisch von Flüssiggasen verwendet werden. Auch kann ein flüssiger Brennstoff wie beispielsweise Benzin, Diesel oder Heizöl in der Brennkammer verbrannt werden.

Zum Zuführen des Brennstoffs in die Brennkammer ist eine Brennstoffzuführung vorgesehen. Je nach Art des Brennstoffs kann die Brennstoffzuführung unterschiedlich gestaltet sein. Sie kann beispielsweise ein Magnetventil beinhalten, durch das ein gasförmiger oder flüssiger Brennstoff in die Brennkammer einströmen kann.

Weiterhin ist eine Verbrennungsluftzuführung zum Zuführen der Verbrennungsluft in die Brennkammer vorgesehen. Durch die Verbrennungsluftzuführung kann Verbrennungsluft aus der Umgebung angesaugt und in die Brennkammer geführt werden, wo sie mit dem Brennstoff vermischt wird.

Eine Fördermenge (Förderstrom) an Verbrennungsluft, welche durch die Verbrennungsluftzuführung in die Brennkammer geführt wird, ist steuerbar. So kann die Verbrennungsluftzuführung in einer Ausführungsform ein Gebläse mit einem Lüfterrad oder einem Propeller aufweisen. Durch ein Drehen des Lüfterrads wird Verbrennungsluft aus der Umgebung der Brennervorrichtung angesaugt und in die Brennkammer geführt.

Ein Ändern der Gebläsedrehzahl führt zu einer Änderung der Fördermenge an Verbrennungsluft, welche dem durch das Gebläse zugeführten Volumenstrom entspricht. In Abhängigkeit von der Dichte beziehungsweise der Temperatur der Verbrennungsluft wird damit auch der stöchiometrisch relevante Massestrom an Verbrennungsluft bestimmt.

Weiterhin weist die Brennervorrichtung eine Zündvorrichtung zum Zünden eines Gemisches des Brennstoffs und der Verbrennungsluft in der Brennkammer auf. Hierzu kann beispielsweise eine Zündkerze oder Glühkerze vorgesehen sein, die unter kontinuierlichem Glühen oder wiederholtem Funkenschlag das Zünden des Gemischs aus Brennstoff und Verbrennungsluft in der Brennkammer ermöglicht.

Das Verfahren zum Starten der Brennervorrichtung weist die folgenden Schritte auf:

- Einstellen der Fördermenge der Verbrennungsluftzufuhr auf eine Startfördermenge;
- Einschalten der Zündvorrichtung und Öffnen der Brennstoffzuführung; und
- im Wesentlichen kontinuierliches Absenken der Fördermenge der Verbrennungsluftzufuhr, bis

  + eine Flamme in der Brennkammer erkannt wird und/oder
  + eine vorbestimmte Minimalfördermenge (Minimaler Förderstrom) erreicht ist und/oder
  + seit dem Beginn des Absenkens der Fördermenge eine Zündphase einer vorbestimmten Dauer verstrichen ist.

Die Startfördermenge der Verbrennungsluftzuführung kann derart hoch gewählt sein, dass in der Brennkammer zunächst kein zündfähiges Gemisch aus Brennstoff und Verbrennungsluft entstehen kann. Bei dem darauffolgenden Einschalten der Zündvorrichtung und Öffnen der Brennstoffzuführung zur Brennkammer ist es daher möglich, dass das entstehende Gemisch zunächst nicht zündet.

Eine Reihenfolge des Öffnens der Brennstoffzuführung und des Einschaltens der Zündvorrichtung ist unerheblich, so dass zunächst die Brennstoffzuführung geöffnet und dann die Zündvorrichtung eingeschaltet werden kann oder umgekehrt. Das Einschalten der Zündvorrichtung und das Öffnen der Brennstoffzuführung können auch weitgehend gleichzeitig durchgeführt werden.

Bei eingeschalteter Zündvorrichtung und geöffneter Brennstoffzuführung erfolgt nun das im Wesentlichen kontinuierliche Absenken der Fördermenge an Verbrennungsluft. Auch hierbei ist der genaue Zeitpunkt des Beginns des Absenkens unerheblich, so dass der Zeitpunkt des Beginns vor, während oder nach dem Öffnen der Brennstoffzuführung und/oder dem Einschalten der Zündvorrichtung stattfinden kann. Wesentlich ist jedoch, dass das Absenken der Fördermenge an Verbrennungsluft im Wesentlichen bei eingeschalteter Zündvorrichtung und geöffneter Brennstoffzuführung durchgeführt wird.

Das Absenken der Fördermenge an Verbrennungsluft kann durch eine entsprechende Ansteuerung der Verbrennungsluftzuführung erreicht werden, so zum Beispiel durch eine Anpassung der Drehzahl des Lüfterrads des Gebläses, soweit ein solches Gebläse vorgesehen ist.

Das Absenken kann in vielfältiger Art und Weise gestaltet werden. Beispielsweise ist es möglich, das Absenken stetig, zum Beispiel linear, vorzunehmen. Hierbei kann eine Absenkgeschwindigkeit als wesentlicher Parameter geeignet bestimmt werden. Alternativ ist es möglich, die Fördermenge stufen- oder schrittweise zu senken. Wesentlich ist, dass die Absenkgeschwindigkeit derart gewählt ist oder das schrittweise Absenken in genügend kleinen Schritten erfolgt, sodass in der Brennkammer der Anteil an Verbrennungsluft im Gemisch des Brennstoffs und der Verbrennungsluft im Wesentlichen kontinuierlich abgesenkt wird. So können alle für eine Zündung möglicherweise geeigneten Brennstoffkonzentrationen in der Brennkammer durchlaufen werden, und es wird eine Zündung in einem mageren Brennstoff-Luftgemisch ermöglicht.

Wird die Flamme in der Brennkammer erkannt, so wird das kontinuierliche Absenken der Fördermenge an Verbrennungsluft beendet. Anschließend kann die Fördermenge beispielsweise konstant gehalten werden. Hierdurch kann erreicht werden, dass die Brennervorrichtung nach dem Zünden auch weiterhin in dem mageren Brennstoff-Luft-Gemisch betrieben wird.

Das im Wesentlichen kontinuierliche Absenken der Fördermenge an Verbrennungsluft wird auch dann beendet, wenn eine vorbestimmte Minimalfördermenge, also ein vorbestimmter minimaler Förderstrom, erreicht ist. Die Minimalfördermenge kann beispielsweise derart bestimmt werden, dass unabhängig von den Umgebungsbedingungen bei einer Verbrennungsluftzufuhr unterhalb der Minimalfördermenge das in der Brennkammer vorliegende Brennstoff-Luft-Gemisch wegen einem Mangel an Verbrennungsluft und einem Überschuss an Brennstoff nicht mehr zündfähig ist. Auch ist es möglich, die Minimalfördermenge derart zu bestimmen, dass ein Start des Brenners bei Unterschreiten der Minimalfördermenge ungünstige Schadstoffkonzentrationen im Abgas verursachen würde. Weiterhin kann die Minimalfördermenge an Verbrennungsluft auch im Hinblick auf einen minimal möglichen Brennstoffmassestrom in die Brennkammer bestimmt werden, der ebenfalls Einfluss auf die Luftzahl hat. Dieser kann beispielsweise von der Gestaltung der Brennstoffzuführung, die ein Magnetventil und/oder einen Druckregler aufweisen kann, und von der Beschaffenheit des Brennstoffs abhängen. Zudem kann bei der Bestimmung der Minimalfördermenge berücksichtigt werden, ob es sich um einen teilvormischenden Brenner handelt.

So kann erreicht werden, dass während des im Wesentlichen kontinuierlichen Absenkens der Fördermenge an Verbrennungsluft im Wesentlichen alle Brennstoffkonzentrationen, die für möglicherweise zündfähig erachtet werden, in der Brennkammer durchlaufen werden.

Ist seit dem Beginn des Absenkens der Fördermenge an Verbrennungsluft bei eingeschalteter Zündvorrichtung und geöffneter Brennstoffzuführung eine Zündphase mit vorbestimmter Dauer verstrichen, so wird das im Wesentlichen kontinuierliche Absenken beendet. Die Dauer der Zündphase kann dabei so bestimmt und auf die Absenkgeschwindigkeit der Fördermenge der Verbrennungsluftzuführung abgestimmt werden, dass während der Zündphase alle relevanten Konzentrationen des Brennstoff-Luft-Gemischs in der Brennkammer erreicht werden.

Endet die Zündphase, ohne dass eine Flamme in der Brennkammer erkannt wurde, kann von einer Störung des Brennerbetriebs ausgegangen werden. Beispielsweise kann ein solcher Fall auftreten, wenn die Brennstoffzuführung, die Verbrennungsluftzuführung oder die Zündvorrichtung defekt ist, sodass in der Brennkammer keine Zündung eingeleitet werden kann. Die Störung kann einem Bediener signalisiert werden oder zu einem Wiederholen der Zündphase führen.

Durch das Verfahren kann erreicht werden, dass unabhängig von vorliegenden Umgebungsbedingungen bei Zünden der Flamme ein hoher Anteil von Verbrennungsluft im Brennstoff-Luft-Gemisch enthalten sein kann. Dies ermöglicht einen Start der Brennervorrichtung bei definierten Bedingungen in der Brennkammer, wodurch störende Startgeräusche (Brummen) und Verpuffungen von Brennstoff vermieden werden und ein luftzahloptimiertes Starten ermöglicht wird.

Da das Verfahren eine Zündung bei einem hohen Anteil von Verbrennungsluft im Brennstoff-Luft-Gemisch in der Brennkammer ermöglicht, kann nach einer Zündung die Flamme in der Brennkammer abheben, pumpen und/oder erlöschen.

Erfindungsgemäß wird daher nach einem Erkennen eines Erlöschens der Flamme die Fördermenge an Verbrennungsluft ausgehend von einer zum Zeitpunkt der Erkennung vorliegenden Fördermenge während der Zündphase weiter im Wesentlichen kontinuierlich abgesenkt werden, während die Zündvorrichtung eingeschaltet und die Brennstoffzuführung geöffnet ist. Das im Wesentlichen kontinuierliche Absenken der Fördermenge an Verbrennungsluft wird so lange fortgesetzt, bis eine neue Flamme in der Brennkammer erkannt wird.

Falls die Flamme in der Brennkammer wiederholt erlischt, kann auch das Absenken der Fördermenge an Verbrennungsluft bei geöffneter Brennstoffzuführung und eingeschalteter Zündvorrichtung wiederholt fortgesetzt werden. So kann verhindert werden, dass eine instabile Verbrennungsreaktion nach einer frühen Zündung in einem Brennstoff-Luft-Gemisch mit einem hohen Anteil von Verbrennungsluft den Startvorgang vorzeitig beendet, obwohl das in der Brennkammer vorliegende Gemisch noch keine stabile Verbrennungsreaktion zulässt.

In einer Ausführungsform wird eine zum Zeitpunkt des Erkennens der Flamme vorliegende Fördermenge an Verbrennungsluft als Zündfördermenge definiert. In einer sich an die Startphase anschließenden Vorwärmphase und/oder einem sich an die Vorwärmphase anschließenden Heizbetrieb kann dann die Fördermenge auf Basis der Zündfördermenge bestimmt werden. Dies ermöglicht es, die bei der Zündung vorliegende Fördermenge festzustellen und als Basis für den weiteren Betrieb der Brennervorrichtung in der Vorwärmphase und im Heizbetrieb zu verwenden.

Da die Zündfördermenge zum Zeitpunkt einer stabilen Zündung in einem mageren Brennstoff-Luft-Gemisch festgestellt wurde, ermöglicht die Bestimmung der Fördermenge an Verbrennungsluft auf Basis der Zündfördermenge in der Vorwärmphase und/oder dem Heizbetrieb ebenfalls einen Betrieb der Brennervorrichtung mit geeigneter Luftzahl. Unabhängig von gegebenen Umgebungsbedingungen wie der Beschaffenheit des Brennstoffs, der Außentemperatur, dem Luftdruck sowie auch unabhängig von den baulichen Gegebenheiten eines Geräts, in dem die Brennervorrichtung integriert sein kann, kann daher ein Betrieb bei einer weitgehend konstanten, geeigneten Luftzahl gewährleistet werden. Dies ermöglicht es, eine günstige Abgasemission zu erreichen und ein rußen und abheben der Flamme zu verhindern.

In einer Variante dieser Ausführungsform wird in der Vorwärmphase und/oder im Heizbetrieb die Temperatur der Verbrennungsluft gemessen. Dies kann beispielsweise durch eine Temperatur-Erfassungseinrichtung geschehen, die die Temperatur der Verbrennungsluft vor dem Einströmen in die Brennkammer misst. Die Verbrennungsluft-Fördermenge kann dann in Abhängigkeit von der Zündfördermenge und von der Verbrennungsluft-Temperatur eingestellt werden.

Auf diese Weise ist es einfach möglich, dass die gewünschte Luftzahl $\lambda$ und/oder das Verhältnis von Verbrennungsluft und Brennstoff in der Brennkammer auch in der Vorwärmphase und dem Heizbetrieb erhalten bleibt. Dabei spielt es keine Rolle, mit welcher Temperatur die Verbrennungsluft zugeführt wird. Die sich aus unterschiedlichen Verbrennungsluft-Temperaturen ergebenden Dichteunterschiede werden durch die Anpassung der Verbrennungsluft-Fördermenge kompensiert. Bei niedrigen Temperaturen hat die Verbrennungsluft eine höhere Dichte, sodass ein geringerer Volumenstrom an Verbrennungsluft ausreicht, um die gleiche Luftzahl $\lambda$ zu erreichen. Dementsprechend wird eine vergleichsweise geringere Fördermenge benötigt. Steigt hingegen die Verbrennungsluft-Temperatur, so sinkt entsprechend die Dichte der Verbrennungsluft, sodass eine vergleichsweise größere Verbrennungsluft-Fördermenge benötigt wird, um die gleiche Luftzahl $\lambda$ in der Brennkammer zu erreichen.

In einer Variante dieser Ausführungsform wird in der Vorwärmphase die Verbrennungsluft-Fördermenge in Abhängigkeit von der Temperatur der Verbrennungsluft auf Basis einer von der Zündfördermenge bestimmten Vorwärmkennlinie bestimmt. Die Vorwärmkennlinie kann die Fördermenge in Abhängigkeit von der Temperatur der Verbrennungsluft angeben. Nach einem Startvorgang, nachdem also eine stabile Flamme in der Brennkammer erkannt wurde, kann die Vorwärmkennlinie auf die jeweilige Zündfördermenge angepasst werden. So kann erreicht werden, dass in der Vorwärmphase die Brennervorrichtung mit einer geeigneten Luftzahl betrieben wird, so dass die Entwicklung von Störgeräuschen verhindert und ein emissionsarmer Brennerbetrieb ermöglicht wird.

In einer weiteren Variante der Ausführungsform wird im Heizbetrieb die Fördermenge in Abhängigkeit von der Temperatur der Verbrennungsluft auf Basis einer im Wesentlichen linearen, von der Zündfördermenge bestimmten Heizkennlinie bestimmt. Auch die Heizkennlinie wird nach einem erfolgten Start bei Vorliegen einer stabilen Flamme in der Brennkammer auf die Zündfördermenge angepasst. Die Brennervorrichtung kann dann bis zu einem nächsten Neustart auf Basis der so angepassten Heizkennlinie energieeffizient und emissionsarm betrieben werden.

Die Heizkennlinie kann die Fördermenge beispielsweise als linear abhängig von der Temperatur der Verbrennungsluft beschreiben. So kann sie dann beispielsweise durch die Formel

$$(1) \qquad F = c_1 \times T + c_2$$

mit der Fördermenge F, der Verbrennungslufttemperatur T, einem Anstieg $c_1$ und einem Achsenabschnitt $c_2$ beschrieben werden. Hierbei kann der Anstieg $c_1$ beispielsweise fest in einer Steuerung hinterlegt sein. Der Achsenabschnitt $c_2$ kann hingegen in Abhängigkeit von der Zündfördermenge festgelegt sein. So kann durch die Formel (1) eine weitgehend konstante, geeignete Luftzahl λ in der Brennkammer gewährleistet werden.

In einer weiteren Ausführungsform kann die Startfördermenge derart bestimmt sein, dass zum Beginn der Zündphase das Verhältnis der Masse der Verbrennungsluft zur Masse des Brennstoffs in der Brennkammer größer ist als bei einem zündfähigen Gemisch. Das zum Beginn der Zündphase in der Brennkammer vorliegende Gemisch kann dann als mager bezeichnet werden, die vorliegende Luftzahl λ ist größer als bei einem zündfähigen Gemisch. Hierdurch kann erreicht werden, dass eine Zündung bei einem Gemisch mit möglichst hohem Luftanteil stattfindet, sodass ein sauberer Start bei definierten Bedingungen unter Vermeidung von störenden Startgeräuschen stattfinden kann.

In einer Variante kann der Zündphase eine Vorspülphase vorgelagert sein, in welcher die Verbrennungsluftzufuhr der Brennkammer eine Vorspülfördermenge an Verbrennungsluft zuführt. Eine derartige Vorspülphase wird beispielsweise durch Normen wie die EN 624 gefordert, um Verpuffungen zu verhindern. Durch das Vorspülen mit Verbrennungsluft in der Vorspülphase können definierte Startbedingungen vor dem Beginn der Zündphase in der Brennkammer erreicht werden. Weiterhin ist es möglich, in der Vorspülphase die Temperatur der Verbrennungsluft zu messen und die Startfördermenge und/oder die Minimalfördermenge in Abhängigkeit von der Temperatur der Verbrennungsluft geeignet festzulegen.

Das Bestimmen der Temperatur in der Vorspülphase und damit vor einem Zünden der Flamme in der Brennkammer ermöglicht es, die Temperatur der Verbrennungsluft vor dem Zünden und damit die Umgebungstemperatur festzustellen. So können die Startfördermenge und/oder die Minimalfördermenge auf die Umgebungsgebedingungen, insbesondere die Temperatur der Verbrennungsluft angepasst werden. Dadurch kann gewährleistet werden, dass bei den vorliegenden Umgebungsbedingungen während des im Wesentlichen kontinuierlichen Absenkens der Fördermenge in der Zündphase ein geeignetes Gemisch aus Verbrennungsluft und Brennstoff in der Brennkammer erreicht werden kann.

In einer Ausführungsform weist die Brennkammer eine Flammenerkennungseinrichtung auf, welche die Brennkammer während der Zündphase im Wesentlichen kontinuierlich zum Erkennen der Flamme überwacht. Hierzu kann beispielsweise ein Ionisationssignal in der Brennkammer ausgewertet werden. Die Flammenerkennungseinrichtung ermöglicht es, während der Zündphase festzustellen, ob eine Zündung in der Brennkammer stattgefunden hat. Weiterhin kann durch die Flammenerkennungseinrichtung erkannt werden, wenn die Flamme in der Brennkammer erlischt.

Eine Brennervorrichtung weist eine Brennkammer, eine steuerbare Brennstoffzuführung, eine Verbrennungsluftzuführung mit einer steuerbaren Fördermengenstelleinrichtung zum Einstellen einer Fördermenge an Verbrennungsluft, eine Zündvorrichtung und eine Flammenerkennungseinrichtung entsprechend der obigen Beschreibung auf. Weiterhin ist eine Ablaufsteuerung vorgesehen, die ein Starten der Brennervorrichtung mit den folgenden Abschnitten steuert:

- Ansteuern der Fördermengenstelleinrichtung zum Einstellen der Fördermenge der Verbrennungsluftzuführung auf eine Startfördermenge; und
- Ansteuern der Fördermengenstelleinrichtung zum im Wesentlichen kontinuierlichen Absenken der Fördermenge, während die Brennstoffzuführung öffnet und die Zündvorrichtung eingeschaltet ist, bis

  + eine Flamme in der Brennkammer erkannt wird und/oder
  + eine vorbestimmte Minimalfördermenge erreicht ist und/oder
  + seit dem Beginn des Absenkens der Fördermenge eine Zündphase einer vorbestimmten Dauer gestrichen ist.

- Ansteuern der Fördermengenstelleinrichtung bei Erkennen eines Erlöschens der Flamme während der Zündphase auf eine zum Zeitpunkt des Erlöschens vorliegende Fördermenge an Verbrennungsluft; und
- Ansteuern der Fördermengenstelleinrichtung zum im Wesentlichen kontinuierlichen Absenken der Fördermenge, während die Brennstoffzuführung geöffnet und die Zündvorrichtung eingeschaltet ist, bis

  + eine Flamme in der Brennkammer erkannt wird und/oder

Die Brennervorrichtung ermöglicht daher ein wiederholtes und fortgesetztes Absenken der Fördermenge an Verbrennungsluft nach einem Erlöschen der Flamme in der Brennkammer. Somit wird erreicht, dass die Luftzahl in der Brennkammer weiter abgesenkt und das vorliegende Gemisch aus Verbrennungsluft und Brennstoff zunehmend fetter wird.

Hierdurch kann auch nach einem Zünden einer zunächst instabilen Flamme bei einem sehr mageren Brennstoff-Luft-Gemisch in der Brennkammer und nach dem Erlöschen der Flamme erreicht werden, dass die Luftzahl λ abgesenkt wird, sodass das Luft-Brennstoff-Gemisch in der Brennkammer weiter mit Brennstoff angereichert wird. So kann schrittweise eine Fördermenge erreicht werden, die ein stabiles Brennen der Flamme in der Brennkammer ermöglicht.

In einer weiteren Ausführungsform steuert die Ablaufsteuerung zusätzlich die folgenden Abschnitte:

- Definieren einer zum Zeitpunkt des Erkennens der Flamme vorliegenden Fördermenge an Verbrennungsluft als Zündfördermenge; und
- Bestimmen der Fördermenge an Verbrennungsluft in einer sich an die Startphase anschließenden Vorwärmphase und/oder in einem sich an die Vorwärmphase anschließenden Heizbetrieb auf Basis der Zündfördermenge.

In dieser Variante ist es möglich, wie oben bereits dargestellt die Zündfördermenge festzustellen, die unter den gegebenen Umgebungsbedingungen zu einer stabilen Zündung in einem weitgehenden mageren Gemisch geführt hat. Auf Basis dieser Zündfördermenge kann in der Brennervorrichtung die Fördermenge an Verbrennungsluft in der nachgelagerten Vorwärmphase oder dem Heizbetrieb derart festgelegt werden, dass in der Brennkammer ein stabiler Verbrennungsprozess mit geeigneter Luftzahl $\lambda$ erreicht wird, bei dem Störgeräusche (Brummen) vermieden und eine geringe CO-Emission erreicht werden können.

Diese und weitere Vorteile und Merkmale der Erfindung werden nachfolgend anhand von Beispielen unter Zuhilfenahme der begleitenden Figuren näher erläutert. Es zeigen:

Fig. 1 ein schematisches Blockschaltbild einer Ausführungsform der Brenner- vorrichtung;

Fig. 2 einen Fördermengenverlauf der Verbrennungsluftzuführung beim Starten der Brennervorrichtung;

Fig.3a einen weiteren Fördermengenverlauf der Verbrennungsluftzuführung beim Starten der Brennervorrichtung mit Erreichen der Minimalförder- menge; und

Fig. 3b einen weiteren Fördermengenverlauf einer Verbrennungsluftzuführung beim Starten der Brennervorrichtung mit Verstreichen der Zündphase.

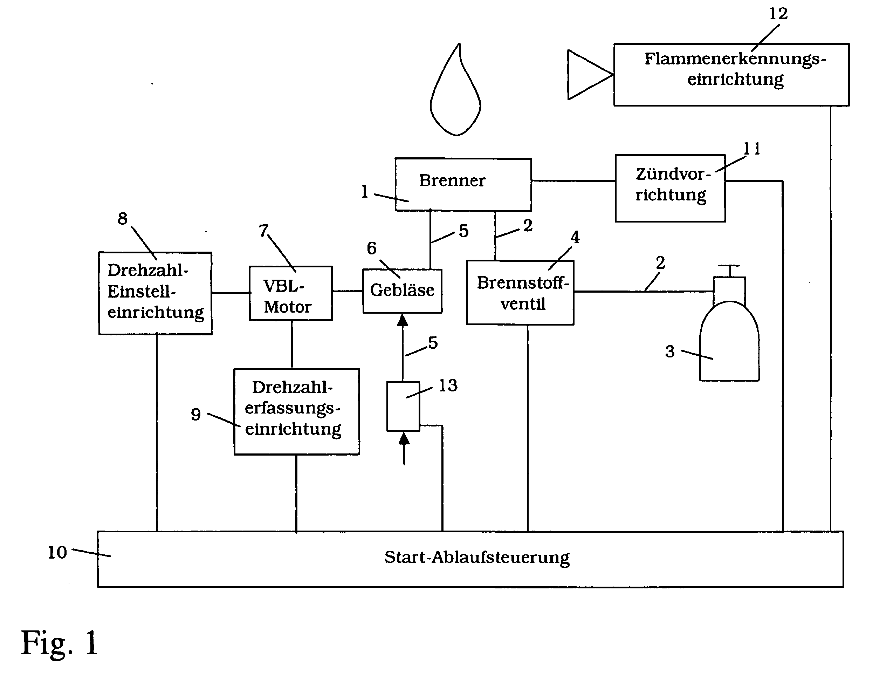

Fig. 1 zeigt als Blockschaltbild den schematischen Aufbau einer Ausführungsform der erfindungsgemäßen Brennervorrichtung.

Die Brennervorrichtung kann Bestandteil eines Heizgeräts sein, das insbesondere in Booten oder Freizeitfahrzeugen eingesetzt wird. Dementsprechend werden die heißen Rauchgase an einem Wärmetauscher vorbeigeführt, um die Wärme an ein Wärmeübertragungsmedium in bekannter Weise abzugeben.

Ein Brenner 1 dient zum Verbrennen eines Gemisches aus Brennstoff und Verbrennungsluft. Der Brennstoff wird über eine Brennstoffleitung 2 von einem Brennstoffvorrat 3 zugeführt. In die Brennstoffleitung 2 ist ein Brennstoffventil 4 eingebaut, das die Brennstoffleitung 2 öffnet bzw. schließt. Das Brennstoffventil 4 kann als Magnetventil ausgeführt und dementsprechend elektrisch schaltbar sein. Bei dem Brennstoffvorrat 3 kann es sich um eine Gasvorratsflasche handeln, die Flüssiggas, z. B. Propan oder Butan oder ein Gemisch davon enthält, oder auch um einen Tank, der beispielsweise einen flüssigen Brennstoff wie Benzin, Diesel oder Heizöl enthalten kann.

Zwischen dem Brennstoffvorrat 3 und dem Brennstoffventil 4 kann darüber hinaus eine an sich bekannte Regelvorrichtung zur Druckminderung eines möglicherweise in dem Brennstoffvorrat 3 herrschenden Drucks auf einen für den Brenner 1 geeigneten, geringeren Druck vorgesehen sein.

Die Verbrennungsluft wird über eine Verbrennungsluftleitung durch ein Verbrennungsluftgebläse 6 aus der Umgebung angesaugt und dem Brenner 1 zugeführt.

In dem Brenner 1 kann ein geeignetes stöchiometrisches Verhältnis von Brennstoff und Verbrennungsluft hergestellt werden, das einen stabilen Brennerbetrieb ermöglicht und Störgeräusche (Brummen) vermeidet. Als Maßstab dafür dient die Luftzahl $\lambda$, die das Verhältnis zwischen einer tatsächlich zugeführten Verbrennungsluftmenge zu einer theoretisch bei vollständiger Verbrennung erforderlichen Mindest-Verbrennungsluftmenge wiedergibt. Es ist bekannt, dass bei einem leichten Verbrennungsluft-Überschuss eine optimale Verbrennung erreicht werden kann.

Die Zufuhr des Brennstoffes kann im Wesentlichen konstant sein, beispielsweise weil sich der Druck, mit dem der Brennstoff aus dem Brennstoffvorrat 3 zugeführt wird, aufgrund der stromab von dem Brennstoffvorrat 3 angeordneten Druckregler und der von diesem durchgeführten Druckminderungsvorgänge praktisch nicht ändert. Dementsprechend kann die Luftzahl $\lambda$ vor allem durch das Verändern der Verbrennungsluftzufuhr eingestellt werden.

Zu diesem Zweck ist es möglich, die Fördermenge an Verbrennungsluft und damit den Verbrennungsluft-Förderstrom durch Variieren der Drehzahl eines das Verbrennungsluftgebläse 6 antreibenden Verbrennungsluftmotors 7 über eine Drehzahleinstelleinrichtung 8 anzupassen. Durch die Variation der Drehzahl kann beispielsweise ein im Verbrennungsluftgebläse 6 vorgesehenes Lüfterrad (nicht gezeigt) angetrieben werden, durch den Umgebungsluft angesaugt und dem Gasbrenner als Verbrennungsluft zugeführt wird.

Sofern eine besondere Regelungsgüte erreicht werden soll, kann darüber hinaus eine Drehzahl-Erfassungseinrichtung 9 vorgesehen sein, die die Drehzahl des Verbrennungsluftmotors 7 überwacht und gegebenenfalls mit Hilfe der Drehzahleinstelleinrichtung 8 nachregelt. Als Verbrennungsluftmotor 7 eignet sich beispielsweise ein PWM-Motor (PWM: Pulse-Width-Modulation), da dessen Drehzahl gleichermaßen einfach und zuverlässig angesteuert werden kann. Die Drehzahl des Verbrennungsluftmotors 7 lässt sich durch die Drehzahleinstelleinrichtung 8 auf beliebige Werte innerhalb eines Arbeitsbereichs einstellen.

Für die vorliegende Erfindung ist der Vorgang des Startens bzw. Zündens der Brennervorrichtung von Bedeutung. Daher wird im Folgenden auf eine Start-Ablaufsteuerung 10 eingegangen, die allerdings Bestandteil einer allgemeinen, allumfassenden Steuerung der Brennervorrichtung sein kann. Die Start-Ablaufsteuerung 10 ist mit dem Brennstoffventil 4, der Drehzahleinstelleinrichtung 8 und - sofern vorhanden - der Drehzahl-Erfassungseinrichtung 9 gekoppelt. Sie ist dementsprechend in der Lage, sowohl die Brennstoffzuführung zu öffnen als auch die Verbrennungsluftzufuhr zu regeln. Eine Regelung der Verbrennungsluftzufuhr kann dabei beispielsweise auf Basis von durch die Start-Ablaufsteuerung 10 berechneten Vorgaben, beispielsweise auf Grundlage von in der Start-Ablaufsteuerung 10 hinterlegten Steuerprogrammen, vorgenommen werden. Weiterhin ist es möglich, die Verbrennungsluftzufuhr auch in Abhängigkeit von Bedienerwünschen, die der Bediener über ein nicht dargestelltes Bedienelement eingegeben hat, zu steuern bzw. zu regeln.

Weiterhin ist die Start-Ablaufsteuerung 10 mit einer Zündeinrichtung 11 verbunden, mit der das brennfähige Brennstoff-Luft-Gemisch, das am Brenner 1 austritt, in bekannter Weise gezündet werden kann. Als Zündeinrichtung 11 eignet sich z. B. eine Zündkerze, die über einen Zeitraum wiederholt Hochspannungsfunken erzeugt, oder auch eine Glühkerze, die durch Glühen über einen Zeitraum das Brennstoff-Verbrennungsluft-Gemisch entzünden kann.

Zusätzlich kann eine an sich bekannte Flammenerkennungseinrichtung 12 vorgesehen sein, die das Vorhandensein einer Flamme am Brenner 1 erkennt. Die Flammenerkennungseinrichtung 12 ermöglicht beispielsweise, ein Brennen oder ein Erlöschen einer Flamme im Brenner 1 anhand eines Ionisationsgrads zu erkennen.

Während einer Zündphase kann ein Brennen und/oder ein Erlöschen einer Flamme im Brenner durch die Flammenerkennungseinrichtung 12 an die Start-Ablaufsteuerung 10 signalisiert werden. Auf Basis dieser Information kann die Start-Ablaufsteuerung 10 einen Ablauf der Zündphase geeignet steuern, wie weiter unten dargestellt.

Darüber hinaus und unabhängig von der Zündphase kann die Flammenerkennungseinrichtung 12 auch ein unkontrolliertes Austreten von unverbranntem Brennstoff vermeiden. Nämlich dann, wenn die Flamme im Brenner 1 erlischt, besteht die Gefahr, dass Brennstoff am Brenner 1 austritt, ohne dass er verbrannt wird. Dies erfordert umgehend ein Zünden durch die Zündeinrichtung 11 oder ein Absperren der Brennstoffzufuhr durch das Brennstoffventil 4. Die Flammenerkennungseinrichtung 12 liefert die erforderliche Information an die Start-Ablaufsteuerung 10, die dann die vorprogrammierten Maßnahmen einleitet.

Weiterhin ist eine Temperatur-Erfassungseinrichtung 13 vorgesehen, mit der die Temperatur der dem Brenner 1 zugeführten Verbrennungsluft gemessen werden kann. Das Messergebnis wird der Start-Ablaufsteuerung 10 zur Verfügung gestellt, die dementsprechend eine geeignete Betriebsdrehzahl für das Verbrennungsluftgebläse 6 einstellen kann. Als Temperatur-Erfassungseinrichtung 13 eignet sich ein Thermofühler oder ein Thermoelement, das entweder die Temperatur in der Umgebung oder in der Verbrennungsluftleitung 5 misst.

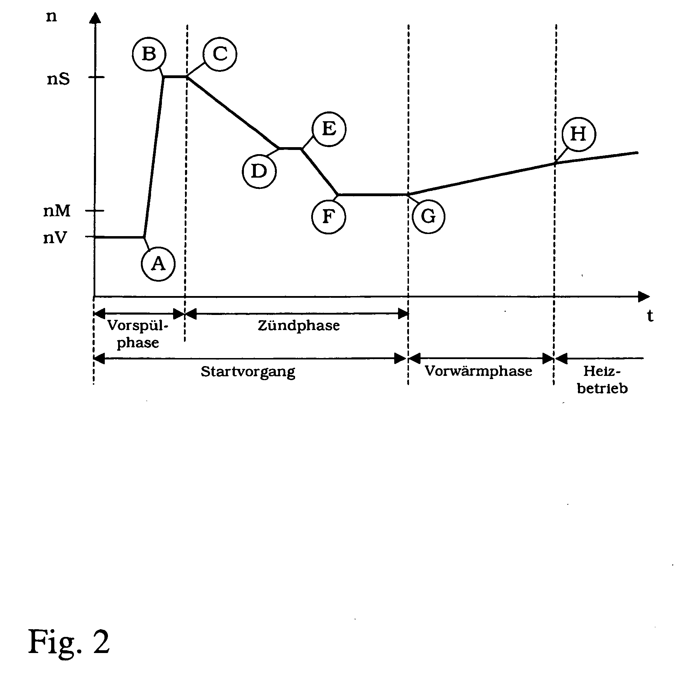

Die Start-Ablaufsteuerung 10 ermöglicht einen Startvorgang der Brennervorrichtung, wie nachfolgend anhand von Fig. 2 erläutert wird.

Fig. 2 zeigt schematisch einen Fördermengenverlauf der Verbrennungsluftzufuhr während eines Startvorgangs einer dem Startvorgang nachgelagerten Vorwärmphase und einem sich daran anschließenden Heizbetrieb. Die dabei verstreichende Zeit t ist auf der horizontalen Achse aufgetragen. Die Fördermenge an Verbrennungsluft bzw. der Förderstrom ist auf der vertikalen Achse angetragen und wird in der gezeigten Ausführungsform als Drehzahl n des Verbrennungsluftmotors 7 beziehungsweise des Lüfterrades des Gebläses 6 angegeben.

Beim Einschalten des Gerätes bzw. beim Eingeben eines Zünd- oder Startkommandos durch den Bediener steuert die Start-Ablaufsteuerung 10 die Drehzahlstelleinrichtung 8 derart an, dass der Verbrennungsluftmotor 7 mit einer Vorspüldrehzahl $n_V$ dreht. Die Vorspüldrehzahl $n_V$ bewirkt, dass eine Vorspülfördermenge an Verbrennungsluft dem Brenner 1 zugeführt wird. Während des Vorspülens kann die Temperatur-Erfassungseinrichtung 13 die Temperatur der dem Brenner 1 zugeführten Verbrennungsluft messen und das Messergebnis der Start-Ablaufsteuerung 10 signalisieren. Auf dieser Basis kann die Start-Ablaufsteuerung eine im Hinblick auf die Temperatur der Verbrennungsluft geeignete Startfördermenge $n_S$ und/oder Minimalfördermenge $n_M$ bestimmen.

In Punkt A der Vorspülphase steuert die Start-Ablaufsteuerung 10 die Drehzahleinstelleinrichtung 8 derart an, dass die Drehzahl n des Verbrennungsluftmotors 7 auf die Startfördermenge $n_S$ angehoben wird. Diese ist in Fig. 2 in Punkt B erreicht und wird bis zum Ende der Vorspülphase in Punkt C beibehalten.

An die Vorspülphase schließt sich in Punkt C die Zündphase an. Zu Beginn der Zündphase wird durch die Start-Ablaufsteuerung das Brennstoffventil 4 geöffnet und die Zündvorrichtung 11 eingeschaltet. Weiterhin wird der Förderstrom, also die Fördermenge an Verbrennungsluft, durch kontinuierliches Absenken der Drehzahl n des Verbrennungsluftmotors 7 abgesenkt, wie in Fig. 2 zwischen Punkt C und Punkt D ersichtlich.

Gleichzeitig wird der Brenner durch die Flammenerkennungseinrichtung 12 kontinuierlich überwacht. In Fig. 2 wird in Punkt D eine Flamme im Brenner 1 erkannt und an die Start-Ablaufsteuerung 10 gemeldet. Diese steuert daraufhin die Drehzahleinstelleinrichtung 8 derart an, dass die Drehzahl n des Verbrennungsluftmotors 7 nicht weiter abgesenkt wird, sondern dass die zum Zeitpunkt der Flammenerkennung vorliegende Drehzahl beibehalten wird. Dies ist in Fig. 2 zwischen Punkt D und Punkt E ersichtlich.

In Punkt E erkennt die Flammenerkennungseinrichtung 12 ein Erlöschen der Flamme im Brenner 1 und signalisiert dieses der Start-Ablaufsteuerung 10. Diese steuert daraufhin erneut die Drehzahleinstelleinrichtung 8 derart an, dass die Drehzahl n des Verbrennungsluftmotors 7 und damit die Fördermenge an Verbrennungsluft zum Brenner erneut kontinuierlich absenkt wird. Da hierbei das Brennstoffventil 4 geöffnet bleibt, verringert sich der Anteil an Verbrennungsluft im Brennstoff-Luft-Gemisch im Brenner 1, sodass das vorliegende Brennstoff-Luft-Gemisch weiter mit Brennstoff angereichert und damit fetter wird.

Durch die Anreicherung des Gemischs kann es in Punkt F erneut zu einer Zündung und damit zur Erkennung und Signalisierung der Flamme an die Start-Ablaufsteuerung 10 durch die Flammenerkennungseinrichtung 12 kommen. Daraufhin kann die Start-Ablaufsteuerung 10 die Drehzahleinstelleinrichtung 8 derart ansteuern, dass die Drehzahl n des Verbrennungsluftmotors 7 konstant gehalten wird.

Hierdurch kann ein Brennstoff-Luft-Gemisch im Brenner 1 erreicht werden, welches idealer Weise dem Luftgemisch im Brenner 1 zum Zeitpunkt des Zündens der Flamme entspricht. Die zugehörige Drehzahl kann nun als Zünddrehzahl definiert werden, die vorliegende Luftzahl als Zündlambda.

Durch Beibehalten der Zünddrehzahl bis zum Ende der Zündphase in Punkt G kann das Zündlambda bis zum Ende der Zündphase beibehalten werden.

An Punkt G ist die Zündphase und damit der Startvorgang beendet. Der Brenner wird nun im Vorwärmbetrieb in einer Vorwärmphase betrieben. In der Vorwärmphase kann die Start-Ablaufsteuerung 10 anhand einer Vorwärmkennlinie die Luftzahl auf dem Zündlambda halten. Die Vorwärmkennlinie kann durch die Start-Ablaufsteuerung 10 auf Basis der Zünddrehzahl, der entsprechenden Zündfördermenge und/oder auf Basis des Zündlambdas bestimmt werden. Die Vorwärmkennlinie wird somit für jeden Startvorgang auf die jeweilige Zünddrehzahl angepasst.

Während der Vorwärmphase wird die Verbrennungslufttemperatur durch die Temperatur-Erfassungseinrichtung 13 gemessen. Aus dieser ergibt sich auf Basis der Vorwärmkennlinie eine Stelldrehzahl, die durch die Start-Ablaufsteuerung 10 der Drehzahleinstelleinrichtung 8 signalisiert wird. Die Drehzahleinstelleinrichtung 8 passt daraufhin die Drehzahl n des Verbrennungsluftmotors 7 an. Hierdurch kann in der Vorwärmphase in Abhängigkeit von der Verbrennungslufttemperatur durch kontinuierliche Anpassung der Drehzahl des Lüfterrads im Gebläse 6 eine dem Zündlambda entsprechende Luftzahl im Brenner 1 erreicht werden, sodass der Brenner 1 mager und emissionsarm bei konstanter Luftzahl betrieben werden kann.

Nach Ablauf der Vorwärmphase geht der Brenner 1 in Punkt H in den Heizbetrieb über. Im Heizbetrieb kann die von der Start-Ablaufsteuerung 10 an die Drehzahleinstelleinrichtung 8 signalisierte Stelldrehzahl auf Basis einer Heizkennlinie bestimmt werden. Auch die Heizkennlinie kann ebenso wie die Vorwärmkennlinie für jeden Startvorgang auf Basis der Zünddrehzahl, der entsprechenden Zündfördermenge und/oder des Zündlambdas neu berechnet werden. Sie gibt die Stelldrehzahl in Abhängigkeit von der Verbrennungslufttemperatur an und kann beispielsweise durch einen linearen Zusammenhang mit einem startunabhängigen Anstieg der Kennlinie, welcher fest in der Steuerung hinterlegt ist, und einem aufgrund der Zündtemperatur, der Zünddrehzahl und/oder der entsprechenden Zündfördermenge definierten Achsenabschnitt beschrieben sein. Die Heizkennlinie kann dabei so ausgelegt sein, dass in Abhängigkeit von der Verbrennungslufttemperatur die Luftzahl im Brenner 1 idealer Weise dem Zündlambda entspricht. Dies ermöglicht einen Heizbetrieb mit günstigen Abgaswerten und einer stabilen Verbrennung.

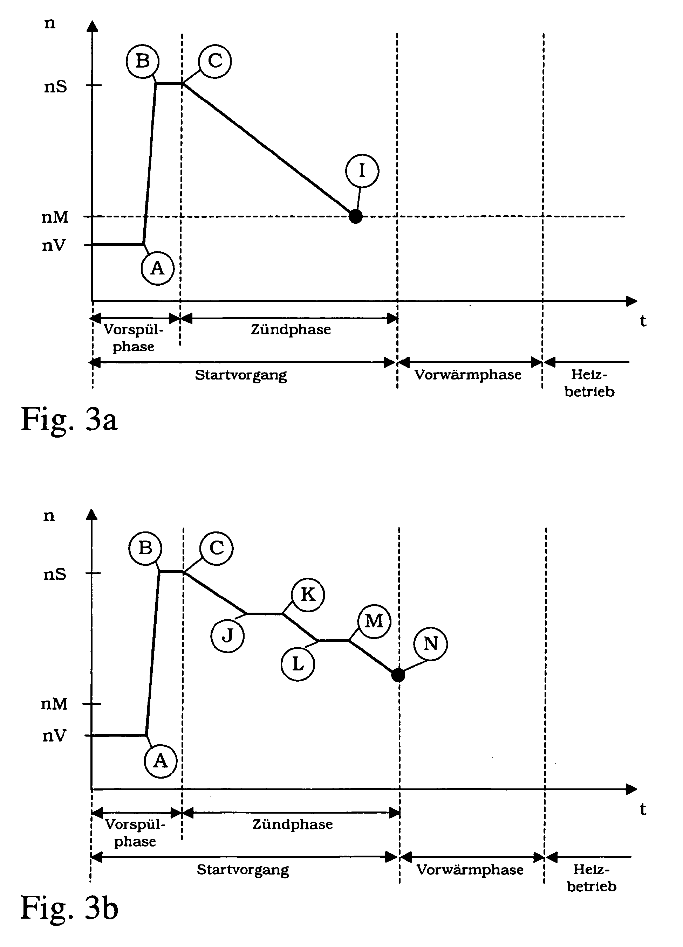

Fig. 3a zeigt einen weiteren Fördermengenverlauf der bereits beschriebenen Brennervorrichtung, bei dem durch das Absenken der Drehzahl n des Verbrennungsluftmotors während der Zündphase eine Minimaldrehzahl nM erreicht wird.

Bis zu Punkt C entspricht der Verlauf in der Vorspülphase dem bereits zu Fig. 2 beschriebenen Verlauf. Ab dem Punkt C wird die Drehzahl n des Verbrennungsluftmotors 7 und damit die Drehzahl des im Gebläse 6 befindlichen Lüfterrads bei geöffnetem Brennstoffventil 4 und eingeschalteter Zündvorrichtung 11 abgesenkt. Dennoch wird bis zu Punkt 1, in dem die vorbestimmte Minimaldrehzahl nM erreicht ist, keine Flamme durch die Flammenerkennungseinrichtung 12 erkannt. Dies kann beispielsweise dadurch begründet sein, dass die Flammenerkennungseinrichtung 12 defekt ist, dass die Zündvorrichtung 11 und/oder das Brennstoffventil 4 eine Fehlfunktion aufweisen, dass der Brennstoffvorrat 3 verbraucht ist, und/oder dass das Gebläse 6 defekt ist oder nicht korrekt angesteuert wird.

Die Start-Ablaufsteuerung erkennt beim Erreichen der Minimaldrehzahl nM das Fehlverhalten und geht in einen Störzustand über. Der Störzustand kann beispielsweise dem Bediener in dem nicht gezeigten Bedienelement signalisiert werden.

In Fig. 3b wird ein weiterer Fördermengenverlauf der bereits beschriebenen Brennervorrichtung dargestellt, bei dem das Ende der Zündphase erreicht wird, ohne dass eine Flamme im Brenner 1 erkannt wird.

Bis zum Punkt C verläuft die Vorspülphase in Fig. 3b analog zu der in Fig. 2 dargestellten. In der Zündphase wird die Drehzahl n des Verbrennungsluftmotors zunächst kontinuierlich abgesenkt, bis im Punkt J eine Flamme im Brenner 1 durch die Flammenerkennungseinrichtung 12 erkannt und an die Start-Ablaufsteuerung 10 gemeldet wird. Diese steuert daraufhin die Drehzahleinstelleinrichtung 8 derart an, dass die Drehzahl n des Verbrennungsluftmotors 7 bis zu Punkt K konstant gehalten wird. In Punkt K erkennt und meldet die Flammenerkennungseinrichtung 12 das Erlöschen der Flamme, woraufhin die Start-Ablaufsteuerung 10 über die Drehzahleinstelleinrichtung 8 die Drehzahl n des Verbrennungsluftmotors 7 weiter kontinuierlich absenkt. In Punkt L wird erneut das Brennen der Flamme im Brenner 1 erkannt und gemeldet, sodass bis zum Punkt M die Drehzahl n des Verbrennungsluftmotors wieder konstant gehalten wird. In Punkt M wird jedoch erneut ein Erlöschen der Flamme im Brenner 1 erkannt und gemeldet, sodass die Drehzahl n des Verbrennungsluftmotors 7 weiter abgesenkt wird.

In Punkt N wird durch die Start-Ablaufsteuerung 10 erkannt, dass die Zündphase verstrichen ist, ohne dass eine stabile Flamme im Brenner 1 erkannt wurde. Die Brennervorrichtung kann dann in den Störzustand übergehen und diesen dem Bediener in dem nicht dargestellten Bedienelement signalisieren. Nach Erreichen des Störzustands kann die Brennervorrichtung in einen sicheren Zustand überführt werden, in dem das Brennstoffventil geschlossen und die Zündvorrichtung 11 sowie der Verbrennungsluftmotor 7 ausgeschaltet ist.

**Patentansprüche**

1.  Verfahren zum Starten einer Brennervorrichtung, wobei die Brennervorrichtung aufweist:

    - eine Brennkammer (1) zum Verbrennen von Brennstoff und Verbrennungsluft;
    - eine Brennstoffzuführung (4) zum Zuführen des Brennstoffs in die Brennkammer (1);
    - einen Verbrennungsluftzuführung (5, 6) zum Zuführen der Verbrennungsluft in die Brennkammer (1), wobei eine Fördermenge an Verbrennungsluft der Verbrennungsluftzuführung (6) steuerbar ist; und
    - eine Zündvorrichtung (11) zum Zünden eines Gemischs des Brennstoffs und der Verbrennungsluft in der Brennkammer (1);

    mit den Schritten:

    - Einstellen der Fördermenge der Verbrennungsluftzuführung (5, 6) auf eine Startfördermenge (nS) und Zuführen der eingestellten Fördermenge an Verbrennungsluft durch die Verbrennungsluftzuführung (5, 6) in die Brennkammer (1);
    - Einschalten der Zündvorrichtung (11) und Öffnen der Brennstoffzuführung (4); und
    - im Wesentlichen kontinuierliches Absenken der Fördermenge, bis eine Flamme in der Brennkammer (1) erkannt wird,
    **gekennzeichnet dadurch, dass**
    nach einem Erlöschen der Flamme während der Zündphase ausgehend von einer zum Zeitpunkt des Erkennens des Erlöschens vorliegenden Fördermenge an Verbrennungsluft die Fördermenge bei eingeschalteter Zündvorrichtung (11) und geöffneter Brennstoffzuführung (4) weiter im Wesentlichen kontinuierlich abgesenkt wird, bis eine neue Flamme in der Brennkammer (1) erkannt wird.

2.  Verfahren nach Anspruch 1, wobei

    - eine zum Zeitpunkt des Erkennens der Flamme vorliegende Fördermenge an Verbrennungsluft als Zündfördermenge definiert wird; und
    - die Fördermenge an Verbrennungsluft in einer der Zündphase nachgelagerten Vorwärmphase und/oder einem der Vorwärmphase nachgelagerten Heizbetrieb auf Basis der Zündfördermenge bestimmt wird.

3.  Verfahren nach Anspruch 1, wobei

    - eine zum Zeitpunkt des Erkennens der Flamme vorliegende Fördermenge an Verbrennungsluft als Zündfördermenge definiert wird;
    - eine Temperatur der Verbrennungsluft gemessen wird; und
    - die Fördermenge an Verbrennungsluft in einer der Zündphase nachgelagerten Vorwärmphase und/oder einem der Vorwärmphase nachgelagerten Heizbetrieb in Abhängigkeit von der Zündfördermenge und von der Temperatur der Verbrennungsluft bestimmt wird.

4.  Verfahren nach einem der Ansprüche 2 oder 3, wobei in der Vorwärmphase die Fördermenge an Verbrennungsluft in Abhängigkeit von der Temperatur der Verbrennungsluft auf Basis einer von der Zündfördermenge bestimmten Vorwärmkennlinie bestimmt wird.

5.  Verfahren nach einem der Ansprüche 2 bis 4, wobei in dem Heizbetrieb die Fördermenge an Verbrennungsluft in Abhängigkeit von der Temperatur der Verbrennungsluft auf Basis einer im Wesentlichen linearen, von der Zündfördermenge bestimmten Heizkennlinie bestimmt wird.

6.  Verfahren nach einem der vorstehenden Ansprüche, wobei die Startfördermenge (nS) derart bestimmt ist, dass zum Beginn der Zündphase das Verhältnis der Masse der Verbrennungsluft zur Masse des Brennstoffs in der Brennkammer größer ist als bei einem zündfähigen Gemisch.

7.  Verfahren nach einem der vorstehenden Ansprüche, wobei der Zündphase eine Vorspülphase vorgelagert ist, in welcher die Verbrennungsluftzuführung eine Vorspülfördermenge (nV) an Verbrennungsluft in die Brennkammer (1) zuführt, und in welcher die folgenden Schritte ausgeführt werden:

    - Messen der Temperatur der Verbrennungsluft; und
    - Bestimmen der Startfördermenge und/oder der Minimalfördermenge in Abhängigkeit von der Temperatur der Verbrennungsluft.

**8.** Verfahren nach einem der vorstehenden Ansprüche, wobei die Brennkammer (1) eine Flammenerkennungseinrichtung (12) aufweist, welche die Brennkammer (1) während der Zündphase im Wesentlichen kontinuierlich zum Erkennen der Flamme überwacht.

**9.** Verfahren nach einem der vorstehenden Ansprüche, wobei die Fördermenge an Verbrennungsluft durch eine Drehzahl eines Lüfterrads bestimmt wird.

**10.** Brennervorrichtung, mit:

- einer Brennkammer (1) zum Verbrennen von Brennstoff und Verbrennungsluft;
- einer steuerbaren Brennstoffzuführung (4) zum Zuführen des Brennstoffs in die Brennkammer;
- einer Verbrennungsluftzuführung (6) zum Zuführen einer Fördermenge an Verbrennungsluft in die Brennkammer (1), wobei die Verbrennungsluftzuführung eine steuerbare Fördermengenstelleinrichtung (7, 8, 9) zum Einstellen der Fördermenge aufweist;
- einer Zündvorrichtung (11) zum Zünden eines Gemischs aus dem Brennstoff und der Verbrennungsluft in der Brennkammer (1);
- eine Flammenerkennungseinrichtung (12) zum Erkennen einer Flamme in der Brennkammer (1); und
- einer Ablaufsteuerung (10), die ein Starten der Brennervorrichtung mit folgenden Abschnitten steuert:

+ Ansteuern der Fördermengenstelleinrichtung (8) zum Einstellen der Fördermenge der Verbrennungsluftzuführung auf eine Startfördermenge (nS);
+ Ansteuern der Fördermengenstelleinrichtung (8) zum im Wesentlichen kontinuierlichen Absenken der Fördermenge, während die Brennstoffzuführung (4) geöffnet und die Zündvorrichtung (11) eingeschaltet ist, bis eine Flamme in der Brennkammer (1) erkannt wird,
**gekennzeichnet dadurch, dass**
die Ablaufsteuerung (10) bei Erkennen eines Erlöschens der Flamme während der Zündphase die folgenden Abschnitte steuert:
+ Ansteuern der Fördermengenstelleinrichtung (8) auf eine zum Zeitpunkt des Erlöschens vorliegende Fördermenge an Verbrennungsluft;
+ Ansteuern der Fördermengenstelleinrichtung (8) zum im Wesentlichen kontinuierlichen Absenken der Fördermenge, während die Brennstoffzuführung (4) geöffnet und die Zündvorrichtung (11) eingeschaltet ist, bis eine Flamme in der Brennkammer (1) erkannt wird.

**11.** Brennervorrichtung nach Anspruch 10. wobei die Ablaufsteuerung (10) die folgenden Abschnitte steuert:

+ Definieren einer zum Zeitpunkt des Erkennens der Flamme vorliegenden Fördermenge an Verbrennungsluft als Zündfördermenge; und
+ Bestimmen der Fördermenge an Verbrennungsluft in einer sich an die Zündphase anschließenden Vorwärmphase und/oder in einem sich an die Vorwärmphase anschließenden Heizbetrieb auf Basis der Zündfördermenge.

**Claims**

**1.** Method for starting a burner device, wherein the burner device has:

- a combustion chamber (1) for burning fuel and combustion air;
- a fuel supply (4) for supplying fuel to the combustion chamber (1);
- a combustion air supply (5,6) for supplying combustion air to the combustion chamber (1), whereby a flow rate of the combustion air supplied from the combustion air supply (6) is controllable; and
- an ignition device (11) for igniting a mixture of the fuel and the combustion air in the combustion chamber (1);

with the steps:

- adjusting the flow rate of the combustion air supply (5, 6) to a starting flow rate (nS) and supplying the adjusted flow rate of combustion air through the combustion air supply (5,6) to the combustion chamber (1);
- switching on the ignition device (11) and opening the fuel supply (4); and
- essentially reducing the flow rate continuously until a flame is detected in the combustion chamber, **characterised in that**, when the flame goes out during the ignition phase, the rate of air supply is further reduced, essentially continuously, starting from the flow rate of combustion air supplied at the point of detection of the flameout, with the ignition device (11) switched on and the fuel supply (4) opened, until a new flame is detected in the combustion chamber (1).

**2.** Method in accordance with claim 1, whereby

- a rate of combustion air supply at the time of detection of the flame is defined as the ignition flow rate; and

- the flow rate of combustion air in a pre-heating phase subsequent to the ignition phase and/or a heating operation subsequent to the preheating phase is determined on the basis of the ignition air supply.

3. Method in accordance with claim 1, whereby

- a flow rate of combustion air existing at the time of detection of the flame is defined as ignition flow rate;

- a temperature of the combustion air is measured; and

- the flow rate of combustion air in a preheating phase subsequent to the ignition phase and/or a heating operation subsequent to the reheating phase is determined as a function of the ignition air flow rate and the temperature of the combustion air.

4. Method in accordance with one of the claims 2 or 3, whereby the flow rate of combustion air in the pre-heating phase is determined as a function of the temperature of the combustion air on the basis of a pre-heating characteristic determined from the ignition flow rate.

5. Method in accordance with one of the claims 2 to 4, whereby the flow rate of combustion air in the heating operation is determined as a function of the temperature of the combustion air on the basis of a heating characteristic determined essentially linearly determined from the flow rate of the ignition flow rate.

6. Method in accordance with one of the preceding claims, whereby the starting flow rate (nS) is determined so that the ratio of the mass of combustion air to the mass of fuel in the combustion chamber at the start of the ignition phase is larger than for an ignitable mixture.

7. Method in accordance with one of the preceding claims, whereby the ignition phase is preceded by a pre-purging phase, in which the combustion air supply supplies a pre-purging flow rate (nV) of combustion air to the combustion chamber (1), and in which the following steps are executed:

- measurement of the temperature of the combustion air; and

- determination of the starting flow rate and/or the minimum flow rate supplied as a function of the temperature of the combustion air.

8. Method in accordance with one of the preceding claims, whereby the combustion chamber (1) has a flame detection device (12), which monitors the combustion chamber (1) essentially continuously during the ignition phase to detect the flame.

9. Method in accordance with one of the preceding claims, whereby the flow rate of combustion air is determined by a speed of a fan.

10. Burner device, with:

- a combustion chamber (1) for burning fuel and combustion air;

- a controllable fuel supply (4) for supplying fuel to the combustion chamber;

- a combustion air supply (6) for supplying a flow of combustion air to the combustion chamber (1), whereby the combustion air supply has a controllable flow rate adjusting device (7, 8, 9) for adjusting the flow rate;

- an ignition device (11) for igniting a mixture of fuel and combustion air in the combustion chamber (1);

- a flame detection device (12) for detecting a flame in the combustion chamber (1); and

- a sequence control system (10), which controls a start of the burner device with the following stages:

+ actuating the supply adjusting device (8) for adjusting the flow rate of combustion air supplied to a starting rate (nS);

+ actuating the flow rate adjusting device (8) to continuously reduce the flow rate while the fuel supply (4) is open and the ignition device (11) is switched on, until the flame is detected in the combustion chamber (1), **characterised in that**, the sequence control system (10) controls the following stages when a flame-out is detected during the ignition phase:

+ actuating the supply adjusting device (8) to a flow rate of combustion air supply existing at the time of the flame-out;

+ actuating the supply adjusting device (8) for essentially continuous reduction of the flow rate while the fuel supply (4) is open and the ignition device (11) is switched on, until a flame is detected in the combustion chamber (1).

11. Burner device in accordance with claim 10, whereby the sequence control system (10) controls the following stages:

+ definition of the flow rate of combustion air supplied existing at the time of detection of the flame; and

+ determination of the flow rate of combustion air supply in a preheating phase subsequent to the ignition phase and/or in a heating operation subsequent to the preheating phase on the basis of the ignition flow rate.

## Revendications

1. Procédé pour démarrer un brûleur, le brûleur comportant :

   - une chambre de combustion (1) pour la combustion de combustible et d'air de combustion ;
   - une amenée de combustible (4) pour amener le combustible dans la chambre de combustion (1) ;
   - une amenée d'air de combustion (5, 6) pour amener l'air de combustion dans la chambre de combustion (1), étant précisé qu'un débit d'air de combustion de l'amenée (6) est apte à être commandé ; et
   - un dispositif d'allumage (11) pour enflammer un mélange de combustible et d'air de combustion dans la chambre de combustion (1) ;

   avec les étapes qui consistent :

   - à régler le débit de l'amenée d'air de combustion (5, 6) à un débit de démarrage (nS) et à amener le débit d'air de combustion réglé dans la chambre de combustion (1) par l'amenée d'air de combustion (5, 6) ;
   - à mettre en marche le dispositif d'allumage (11) et à ouvrir l'amenée de combustible (4) ; et
   - à réduire de manière globalement continue le débit jusqu'à ce qu'une flamme soit détectée dans la chambre de combustion (1),

   **caractérisé en ce qu'**après l'extinction de la flamme pendant la phase d'allumage, à partir d'un débit d'air de combustion présent au moment de la détection de l'extinction le débit est encore réduit de manière globalement continue, alors que le dispositif d'allumage (11) est en marche et l'amenée de combustible (4) ouverte, jusqu'à ce qu'une nouvelle flamme soit détectée dans la chambre de combustion (1).

2. Procédé selon la revendication 1, selon lequel

   - un débit d'air de combustion présent au moment de la détection de la flamme est défini comme débit d'allumage ; et
   - le débit d'air de combustion lors d'une phase de préchauffage qui suit la phase d'allumage et/ou lors d'un chauffage qui suit la phase de préchauffage est défini sur la base du débit d'allumage.

3. Procédé selon la revendication 1, selon lequel

   - un débit d'air de combustion présent au moment de la détection de la flamme est défini comme débit d'allumage ;
   - une température de l'air de combustion est mesurée ; et
   - le débit d'air de combustion lors d'une phase de préchauffage qui suit la phase d'allumage et/ou lors d'un chauffage qui suit la phase de préchauffage est défini en fonction du débit d'allumage et de la température de l'air de combustion.

4. Procédé selon l'une des revendications 2 ou 3, selon lequel lors de la phase de préchauffage le débit d'air de combustion est défini en fonction de la température de l'air de combustion sur la base d'une courbe caractéristique de préchauffage définie par le débit d'allumage.

5. Procédé selon l'une des revendications 2 à 4, selon lequel lors du chauffage le débit d'air de combustion est défini en fonction de la température de l'air de combustion sur la base d'une courbe caractéristique de chauffage globalement linéaire définie par le débit d'allumage.

6. Procédé selon l'une des revendications précédentes, selon lequel le débit de démarrage (nS) est défini de telle sorte qu'au début de la phase d'allumage le rapport de la masse de l'air de combustion sur la masse du combustible dans la chambre de combustion soit plus grand qu'avec un mélange inflammable.

7. Procédé selon l'une des revendications précédentes, selon lequel la phase d'allumage est précédée d'une phase de pré-alimentation lors de laquelle l'amenée d'air de combustion amène un débit de pré-alimentation (nV) d'air de combustion dans la chambre de combustion (1) et lors de laquelle les étapes suivantes sont effectuées :

   - mesure de la température de l'air de combustion ; et
   - définition du débit de démarrage et/ou du débit minimal en fonction de la température de l'air de combustion.

8. Procédé selon l'une des revendications précédentes, selon lequel la chambre de combustion (1) comporte un détecteur de flamme (12) qui surveille la chambre de combustion (1) de manière globalement continue pendant la phase d'allumage afin de détecter la flamme.

9. Procédé selon l'une des revendications précédentes, selon lequel le débit d'air de combustion est défini par une vitesse de rotation d'une roue de soufflante.

**10.** Brûleur avec :

- une chambre de combustion (1) pour la combustion de combustible et d'air de combustion ;
- une amenée de combustible (4) apte à être commandée, pour amener le combustible dans la chambre de combustion ;
- une amenée d'air de combustion (6) pour amener un débit d'air de combustion dans la chambre de combustion (1), étant précisé que l'amenée d'air de combustion comporte un dispositif de réglage de débit apte à être commandé (7, 8, 9) pour régler le débit ;
- un dispositif d'allumage (11) pour enflammer un mélange de combustible et d'air de combustion dans la chambre de combustion (1) ;
- un détecteur de flamme (12) pour détecter une flamme dans la chambre de combustion (1) ; et
- une commande de déroulement (10) qui commande un démarrage du brûleur avec les étapes suivantes :

+ commande du dispositif de réglage de débit (8) pour régler à un débit de démarrage (nS) le débit de l'amenée d'air de combustion ;
+ commande du dispositif de réglage de débit (8) pour réduire de manière globalement continue le débit, pendant que l'amenée de combustible (4) est ouverte et le dispositif d'allumage (11) en marche, jusqu'à ce qu'une flamme soit détectée dans la chambre de combustion (1),
**caractérisé en ce que** la commande de déroulement (10), lors de la détection d'une extinction de la flamme pendant la phase d'allumage, commande les étapes suivantes :
+ commande du dispositif de réglage de débit (8) à un débit d'air de combustion présent au moment de l'extinction ;
+ commande du dispositif de réglage de débit (8) pour réduire de manière globalement continue le débit, pendant que l'amenée de combustible (4) est ouverte et le dispositif d'allumage (11) en marche, jusqu'à ce qu'une flamme soit détectée dans la chambre de combustion (1).

**11.** Brûleur selon la revendication 10, étant précisé que la commande de déroulement (10) commande les étapes suivantes :

+ définition d'un débit d'air de combustion présent au moment de la détection de la flamme, comme débit d'allumage ; et
+ définition du débit d'air de combustion lors d'une phase de préchauffage qui fait suite à la phase d'allumage et/ou lors d'un chauffage qui fait suite à la phase de préchauffage, sur la base du débit d'allumage.

Fig. 1

EP 2 116 771 B1

Fig. 2

Fig. 3a

Fig. 3b

**EP 2 116 771 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1717514 A1
- DE 4323221 C1
- EP 0384280 A
- DE 102006006964 A1